Europäisches Patentamt

(19) European Patent Office

Office européen des brevets

(11) Veröffentlichungsnummer: **0 108 911**
A1

(12) **EUROPÄISCHE PATENTANMELDUNG**

(21) Anmeldenummer: 83109952.8

(22) Anmeldetag: 05.10.83

(51) Int. Cl.³: **C 08 F 210/02**
//
C08L23/08 ,(C08F210/02, 220/12)

(30) Priorität: 16.10.82 DE 3238391

(43) Veröffentlichungstag der Anmeldung: 23.05.84
Patentblatt 84/21

(84) Benannte Vertragsstaaten: AT BE DE FR GB NL

(71) Anmelder: BASF Aktiengesellschaft,
Carl-Bosch-Strasse 38, D-6700 Ludwigshafen (DE)

(72) Erfinder: Brandstetter, Franz, Dr., Ritterbueschel 45,
D-6730 Neustadt (DE)
Erfinder: Kuchner, Karl, Dr., Limburgstrasse 91,
D-6702 Bad Duerkheim (DE)
Erfinder: Mietzner, Franz Georg, Dr., Neuhausener
Weg 3, D-6700 Ludwigshafen 29 (DE)
Erfinder: Reimann, Horst, Dr., Adelheidstrasse 26,
D-6520 Worms 1 (DE)
Erfinder: Theysohn, Rainer, Dr., Am Bruch 38,
D-6710 Frankenthal (DE)
Erfinder: Ziegler, Walter, Dr., Starenweg 15,
D-6803 Edingen-Neckarhausen (DE)

(54) Copolymerisate des Ethylens mit (Meth)acrylsäurealkylestern.

(57) Die Erfindung betrifft Copolymerisate des Ethylens, die auf 100 Mol Ethylen 7 bis 22 Mol eines $C_1$- bis $C_8$-(Meth)acrylsäurealkylesters und 0 bis 10 Mol eines weiteren mit Ethylen copolymerisierbaren Monomeren einpolymerisiert enthalten, wobei die Copolymerisate 0,3 bis 6 Gew.-% eines Zusatzes enthalten, dessen Schmelzpunkt unterhalb von 250 °C und dessen Siedepunkt oberhalb von 250 °C liegt und der eine Viskosität, bei der Einmischtemperatur, von unterhalb 1000 mm²/s hat.

EP 0 108 911 A1

0108911

## Copolymerisate des Ethylens mit (Meth)acrylsäurealkylestern

Die Erfindung betrifft Copolymerisate des Ethylens, die auf 100 Mol Ethylen

a)    7 bis 22 Mol eines $C_1$- bis $C_8$-(Meth)acrylsäurealkylesters und

b)    0 bis 10 Mol eines weiteren mit Ethylen copolymerisierbaren Monomeren einpolymerisiert enthalten.

Copolymerisate des Ethylens, die Alkylester der (Meth)acrylsäure einpolymerisiert enthalten, sind beispielsweise aus der GB-PS 870 480, GB-PS 900 969, US-PS 2 953 551, DE-OS 15 20 734 und DE-OS 18 10 526 bekannt.

Enthalten die Copolymerisate einen höheren Anteil an Alkylestern der (Meth)acrylsäure, so neigen sie zum Kleben und sind daher technisch schwer handhabbar.

Der Erfindung lag daher die Aufgabe zugrunde Ethylen-(Meth)acrylsäureester-Copolymerisate mit einem möglichst hohen Anteil an Alkylestern der (Meth)acrylsäure zu schaffen, die sich technisch leicht handhaben lassen.

Diese Aufgabe wurde erfindungsgemäß dadurch gelöst, daß die Ethylen--(Meth)acrylsäurealkylester-Copolymerisate 0,3 bis 6 Gewichtsprozent, bezogen auf das Copolymerisat, eines Zusatzstoffes enthalten, dessen Schmelzpunkt unterhalb von 250°C und dessen Siedepunkt oberhalb von 250°C liegt und der eine Viskosität, bei der Einmischtemperatur, von unterhalb 1000 $mm^2$/s hat.

Die Herstellung der Ethylen-(Meth)acrylsäurealkylester-Copolymerisate kann nach herkömmlichen üblichen Hochdruckpolymerisationsverfahren erfolgen [vgl. Ullmanns Enzyklopädie der Technischen Chemie, 4. Auflage, Band 19, (1980), Seiten 169 bis 175, Verlang Chemie GmbH, D 6940 Weinheim]. Die Copolymerisation des Ethylens mit dem Ester der (Meth)acrylsäure, gegebenenfalls zusammen mit anderen mit Ethylen copolymerisierbaren Monomeren, erfolgt bei Drücken von 350 bis 5000 bar, vorzugsweise 1500 bis 3000 bar. Bei der Herstellung der erfindungsgemäßen Copolymerisate des Ethylens arbeitet man im besonderen bei Drücken von 2000 bis 2800 bar. Die Temperaturen im Polymerisationssystem liegen zwischen 50 und 450°C, vorzugsweise zwischen 150 und 350°C. Die Bedingungen im Polymerisationssystem lassen sich apparativ in sogenannten Rohrreaktoren oder Autoklaven einstellen. Unter Rohrreaktoren versteht man rohrförmige Polymerisationsgefäße, deren Längenausdehnung das über 2000fache, bevor-Fre/Br zugt 5000 bis 50 000fache des Rohrdurchmessers beträgt. Wie üblich, wird ein Teil der Polymerisationswärme durch Kühlung des Rohrreaktors mit Wasser von außen abgeführt. Autoklaven sind Druckgefäße mit einem Längen-/Durchmesser-Verhältnis von 1 bis ca. 20. Besonders geeignet für die Herstellung der erfindungsgemäßen Copolymerisate des Ethylens sind Rohrreaktoren und hierbei vor allem Einzonen- bzw. Zweizonen-Rohrreaktoren. Ganz besonders ist ein Einzonen-Rohrreaktor geeignet.

Die Copolymerisation des Ethylens mit den Estern der (Meth)acrylsäure, gegebenenfalls mit anderen mit Ethylen copolymerisierbaren Monomeren, erfolgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 10 bis

200 Mol.-ppm, bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt: tert.-Butylhydroperoxid, tert.-Butylperbenzoat, Dilauroylperoxid und tert.-Butylperisononanat. Unter radikalischen Polymerisationsinitiatoren sollen auch Verbindungen wie beispielsweise Azo-iso-Buttersäuredinitril verstanden werden. Man kann auch Mischungen aus Sauerstoff und einem oder mehreren Peroxiden verwenden. Besonders geeignet sind Peroxide, wie di-tert.-Butylperoxid, tert.-Butylperpivalat und tert.-Butylperisononanat.

Das Molekulargewicht des anfallenden Copolymerisats kann durch die üblichen Regler, z.B. Kohlenwaserstoffe wie Propan, Propen etc., Ketone wie Aceton, Methylethylketon etc. oder Aldehyde wie Propionaldehyde, auf den gewünschten Wert gebraht werden. Besonders eignet sich hierbei Propionaldehyd.

Die Copolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Als Ester der (Meth)acrylsäure kommen Ester von Alkoholen mit $C_1$- bis $C_8$-Kohlenstoffatomen in Frage. Besonders geeignet sind die Ester der Acrylsäure mit $C_1$- bis $C_8$-Alkoholen. Ganz besonders zeichnet sich der Ester der Acrylsäure mit n-Butanol aus.

Es können aber auch Mischungen aus verschiedenen Estern der Acryl- oder Methacrylsäure verwendet werden.

Die erfindungsgemäßen Copolymerisate des Ethylens enthalten 7 bis 22 Mol, vorzugsweise 8,5 bis 15 Mol Ester der (Meth)acrylsäure auf 100 Mol Ethylen einpolymerisiert.

Enthalten die erfindungsgemäßen Copolymerisate des Ethylens neben den Estern der (Meth)acrylsäure noch andere Comonomere, so sind einpolymerisiert auf 100 Mol Ethylen 7 bis 22 Mol, vorzugsweise 8,5 bis 15 Mol Ester der (Meth)acrylsäure und 0,1 bis 10 Mol, vorzugsweise 1,0 bis 3,3 Mol eines weiteren mit Ethylen copolymerisierbaren Monomeren.

Als weitere Comonomere kommen alle mit Ethylen copolymerisierbaren Monomere, insbesondere solche, die monoethylenisch ungesättigt sind, in Frage. Geeignet sind z.B. Vinylcarbonsäureester, insbesondere Vinylester von $C_1$- bis $C_6$-Alkancarbonsäuren; Ester monoethylenisch ungesättigter Dicarbonsäuren, insbesondere Mono- und Diester der Maleinsäure und Fumarsäure; monoethylenisch ungesättigte Carbonsäuren, insbesondere Acryl-, Methacryl-, Malein- und Fumarsäure; Amide monoethylenisch ungesättigter Carbonsäuren, insbesondere Acryl- und Methacrylsäureamid sowie N-Mono- und N,N-Dialkylamide der Acryl- und Methacrylsäure, monoethylenisch ungesättigte Alkohole, monoethylenisch ungesättigte Ketone, Kohlenmonoxid oder epoxidgruppenhaltige Monomere.

Die erfindungsgemäßen Copolymerisate des Ethylens haben Schmelzindices von kleiner als 200 g/10 min, vorzugsweise im Bereich von 6 bis 100 g/10 min, besonders aber im Bereich von 8 bis 20 g/10 min, gemessen nach DIN 53 735 bei 190°C und 2,16 Kp.

Die erfindungsgemäßen Copolymerisate des Ethylens enthalten 0,3 bis 6 Gew.-% eines Zusatzes, dessen Schmelzpunkt unterhalb von 250°C, vorzugsweise unterhalb von 200°C und dessen Siedepunkt oberhalb von 250°C liegt und der eine Viskosität bei 180°C gemessen unterhalb 1000, vorzugsweise von unterhalb 500 $mm^2$/s hat. Der Schmelzpunkt und der Siedepunkt wurden dabei nach den in dem Lehrbuch "Organicum", VEB Deutscher Verlag der Wissenschaften, Berlin 1968, Seite 80 bis 84 angegebenen Methode und die Viskosität nach DGF-M-1118 der Einheitsmethode der "Deutschen Gesellschaft für Fettwissenschaft e.V." (DGF), Münster, Westfalen bestimmt. In Frage kommen beispielsweise niedermolekulare Polymerisate des Ethylens, Propylens, Copolymerisate des Ethylens mit Propylen, Polymerisate des Ethylenoxids, des Propylenoxids, Copolymerisate des Ethylenoxids mit Propylenoxid, Ester und Amide von Carbonsäuren, Polymerisate des Siliciums und Phosphors und Salze von Carbonsäuren mit 8 bis 30 Kohlenstoffatomen.

Von besonderem Interesse sind dabei Polymerisate des Ethylens, Propylens und deren Copolymerisate mit einem mittleren Molekulargewicht von kleiner 10 000 (bestimmt osmometrisch), Ester und Amide mit mehr als 2 Kohlenstoffatomen im Alkohol- bzw. Aminrest, Polymerisate des Siliciums, wie Dimethylpolysiloxan, Phenylmethylpolysiloxan, mit einer Viskosität von kleiner 10 000 mm$^2$/S (gemessen bei 25°C).

Ganz besonders geeignet sind Polyethylene mit einem mittleren Molekulargewicht von 2000 bis 6000 (bestimmt osmometrisch), Dimethylpolysiloxane mit einer Viskosität von 100 bis 7000 mm$^2$/S (gemessen bei 25°C), Caprolactam, Zinkstearat, Calciumstearat oder Bis(stearoyl)-ethylendiamin.

Die Zugabe und das Einmischen der Zusätze erfolgt u.a. nach der Polymerisation, beispielsweise im Hochdruck- bzw. Niederdruckabscheider bzw. im Austragsextruder. Sie kann aber auch in einem zusätzlichen Aufschmelzschritt vorgenommen werden.

Die so erhaltenen Copolymerisate des Ethylens mit (Meth)acrylsäurealkylestern neigen nicht zum Kleben und lassen sich technisch ohne Probleme handhaben.

## Beispiele

Die in der Tabelle angegebenen Mengen an Copolymerisaten und an Zusätzen werden auf einem Zweiwellenextruder bei 190°C gemischt und granuliert.

Bei den Copolymerisaten handelt es sich um Produkte, die in röhrenförmigen bzw. Autoklaven-Reaktoren bei Drücken oberhalb von 1000 bar in Gegenwart von radikalbildenden Initiatoren erhalten werden.

Als Zusätze fanden Verwendung

I     Dimethylpolysiloxan (Viskosität bei 180°C 100 mm$^2$/s)

II    Polyethylen mit einem mittleren Molekulargewicht von 5000 (Viskosität bei 180°C 413 mm$^2$/s)

III   Bis(stearoyl)ethylendiamin (Viskosität bei 180°C 5,2 mm$^2$/s).

Die Wirkungsweise des Zusatzes wurde folgendermaßen geprüft:

In ein rundes Glasgefäß mit einem Durchmesser von 10 cm und einer Höhe von 10 cm wurden 200 g Granulat des Copolymerisats gegeben, mit einem Stempel von 500 g 24 Stunden bei 40°C belastet. Nach dem Abkühlen wurde durch Kippen des Glasgefäßes geprüft, ob das Produkt noch rieselfähig war.

| Bei-spiele | Copolymerisat-Zusammensetzung Mol auf 100 Mol Ethylen Komponente a | Komponente b | Schmelzindex[1] g/10 min | Zusatz Gew.% | Rieselfähigkeit nach Lagerung |
|---|---|---|---|---|---|
| 1 | n-Butylacrylat 10,5 | | 13 | I 0,5 | ja |
| 2 | " 10,5 | | 13 | I 1,0 | ja |
| 3 | " 10,5 | | 13 | II 3,0 | ja |
| 4 | " 10,5 | | 13 | III 3,0 | ja |
| 5 | " 10,9 | Acrylsäure 2,4 | 15 | I 1,0 | ja |
| 6 | " | " | | II 3,0 | ja |
| 7 | " 13,1 | | 30 | III 5,0 | ja |
| 8 | " 12,7 | | 45 | I 1,5 | ja |

Vergl.
Versuche

| A | n-Butylacrylat 10,5 | | 13 | – | nein |
| B | n-Butylacrylat 10,9 | Acrylsäure 2,4 | 15 | – | nein |

[1] gemessen bei 190°C/2,16 Kp nach DIN 53 375

0108911
O.Z. 0050/36195

## Patentanspruch

Copolymerisate des Ethylens, die auf 100 Mol Ethylen

a)    7 bis 22 Mol eines $C_1$- bis $C_8$-(Meth)acrylsäurealkylesters und

b)    0 bis 10 Mol eines weiteren mit Ethylen copolymerisierbaren Monomeren einpolymerisiert enthalten, wobei die Copolymerisate 0,3 bis 6 Gewichtsprozent, bezogen auf das Copolymerisat, eines Zusatzes enthalten, dessen Schmelzpunkt unterhalb von 250°C und dessen Siedepunkt oberhalb von 250°C liegt und der eine Viskosität, bei der Einmischtemperatur, von unterhalb 1000 $mm^2$/s hat.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 137 818 (DU PONT DE NEMOURS) * Anspruch 1 * | 1 | C 08 F 210/02 // C 08 L 23/08 (C 08 F 210/02 C 08 F 220/12 ) |
| | --- | | |
| Y | FR-A-1 483 500 (NIPPON) * Zusammenfassung, Punkt 1; Seite 1, Spalte 2 * | 1 | |
| | --- | | |
| Y | US-A-3 391 129 (A.E. SPARKS) * Anspruch 1 * | 1 | |
| | --- | | |
| P | EP-A-0 068 148 (DU PONT DE NEMOURS) * Anspruch 1 * | 1 | |
| | ----- | | |

RECHERCHIERTE SACHGEBIETE (Int. Cl. 3)

C 08 F
C 08 L

Der vorliegende Recherchenbericht wurde für alle Patentansprüche erstellt.

| Recherchenort | Abschlußdatum der Recherche | Prüfer |
|---|---|---|
| DEN HAAG | 02-02-1984 | PERMENTIER W.A. |